# EUROPEAN PATENT APPLICATION

(11) **EP 2 797 009 A1**
(43) Date of publication of application: **29.10.2014**
(21) Application number: 13164651.5
(22) Date of filing: 22.04.2013
(51) Int. Cl.: G06F 17/24, G06F 17/27

(54) **Retroactive word correction**

(71) Applicant: BlackBerry Limited, Waterloo, ON N2K 0A7 (CA)
(72) Inventor: Lau, Stephan, Kanata, ON K2K 3K1 (CA); Wood, Christopher William, Kanata, ON K2K 3K1 (CA)
(74) Representative: Moore, Barry

(57) **Abstract**

An electronic device (310) configured for retroactive spell correction includes memory (420), a processor (410), a network interface (440) and a display (430). The device (310) also includes an operating system (450), a message transmitting application (460) and a spell checker (470) operable to perform spell checking on text in messages composed within the message transmitting application (460). Finally, the device (310) includes a retroactive spell correction module (490) coupled to the spell checker (470). The module (490) includes program code enabled to identify both an incorrectly spelled word in a previously transmitted message (130) in the message transmitting application (460) and also a correctly spelled form of the incorrectly spelled word, and to respond to the identification (A) by locating the incorrectly spelled word in the previously transmitted message (130) and (B) by replacing the located incorrectly spelled word with the correctly spelled form of the incorrectly spelled word.

## Description

### Field

The present invention relates to word correction in a text processing application and more particularly to word correction in a messaging application.

Background

Word correction including spell correction has formed part of text processing for many decades. Initially, spell correction had been implemented as a simple application module in which a corpus of text first was parsed and then subsequently compared to a dictionary of known words in order to flag unknown words as misspelled. Subsequent variations of the "spell checker" include dynamic checking of individual words as each word is provided into a text input field. Additional advanced features of the common spell checker include auto-correction in which a selection of speculatively correctly spelled words are presented as an alternative to a dynamically determined misspelled word, or the automated replacement of a misspelled word with a speculatively correctly spelled substitute word. Grammar checkers supplement spell checkers by determining when a correctly spelled word is likely intended to be a different word based upon the context of the correctly spelled word. Consequently, word correction is a term best used to describe the correction of a contextually improper word whether misspelled or spelled correctly.

Of import, no spell checker is considered completed without a user dictionary in which an end user can add words initially flagged by the spell checker as misspelled so that subsequent instances of the added words are to determine those added words as correctly spelled. Further, modem spell checkers self-learn in that an end user can manually detect a misspelled word and provide a correction. The spell checker in turn can detect the manual correction of the misspelled word and, in response, can add a database entry to a dynamic dictionary to account for the manual spell correction of the misspelled word.

Spell checking primarily operates upon a dynamically presented single word in a corresponding single corpus of text. In a message transmitting application such as an e-mail client, a text messaging client, an instant messaging client, a blog, chat room, or bulletin board application, spell checking operates upon words as those words are provided within a single message. Yet, in many cases, the process of spell checking words in a message occurs in parallel to the composition of the message with the words. Consequently, to the extent that the end user directs the transmission of the message before the process of spell checking is able to identify and correct misspelled words results in the transmission of the message with misspellings. Further, in many instances automatic spell checking is not enabled as part of a messaging application and the end user must manually perform spell checking, or the end user must manually initiate a spell checking operation.

In either circumstance, it is typical that the end user identifies one or more misspelled words in an already transmitted message. Of course, the end user may mentally resolve not to misspell those already misspelled words. However, to the extent that the spell checker of the messaging application includes a dynamic auto-correction dictionary in which corrected spellings are added for misspelled words to support an auto-correction of the spell checker, the dynamic auto-correction dictionary will not receive the benefit of the user identified misspelling in an already transmitted message.

BRIEF DESCRIPTION OF THE DRAWINGS

The accompanying drawings, which are incorporated in and constitute part of this disclosure, illustrate example embodiments of the present disclosure and together with the description, serve to explain the principles of the present disclosure. The example embodiments illustrated herein are presently preferred, it being understood, however, that the teachings herein are not limited to the example embodiments shown herein, wherein:

Figure 1 is a pictorial illustration of a process for retroactive word correction in an example message transmitting application;

Figure 2 is a screenshot of an example message transmitting application user interface configured for retroactive word correction;

Figure 3 is a schematic illustration of a message data processing system configured for retroactive word correction;

Figure 4 is a block diagram of a computing architecture configured for retroactive spell correction in a message transmitting application; and

Figure 5 is a flow chart illustrating a process for retroactive spell correction in a message transmitting application.

### DETAILED DESCRIPTION

Example embodiments herein address deficiencies of the art in respect to spell checking within a message transmitting application, hereinafter a "messenger", and provide a method, system and computer program product for retroactive word correction. In one example embodiment, multiple different messages can be exchanged with one or more messaging partners. During composition of a new message, a correctly spelled word can be annotated in response to which, already exchanged ones of the messages can be analyzed to identify an incorrectly spelled form of the correctly spelled word. For each identified incorrectly spelled form of the correctly spelled word, the identified incorrectly spelled form of the correctly spelled word can be replaced with the correctly spelled word in a transcript of the previously sent messages. Further, a dynamic dictionary for the messenger can be updated with the incorrectly spelled form of the correctly spelled word and the corresponding correctly spelled word.

In this way, the correction of incorrect words in an already transmitted message can be corrected even though the message already had been transmitted. Further, an auto-correct dictionary can be updated with an incorrectly spelled word even though the message already had been transmitted. Even yet further, a keyboard mapping can be updated to account for the incorrect word, even though the message already had been transmitted. Additional aspects of the embodiments will be set forth in part in the description which follows, and in part will be obvious from the description, or may be learned by practice of the invention. The aspects will be realized and attained by means of the elements and combinations particularly pointed out in the appended claims. It is to be understood that both the foregoing general description and the following detailed description herein are by way of examples only.

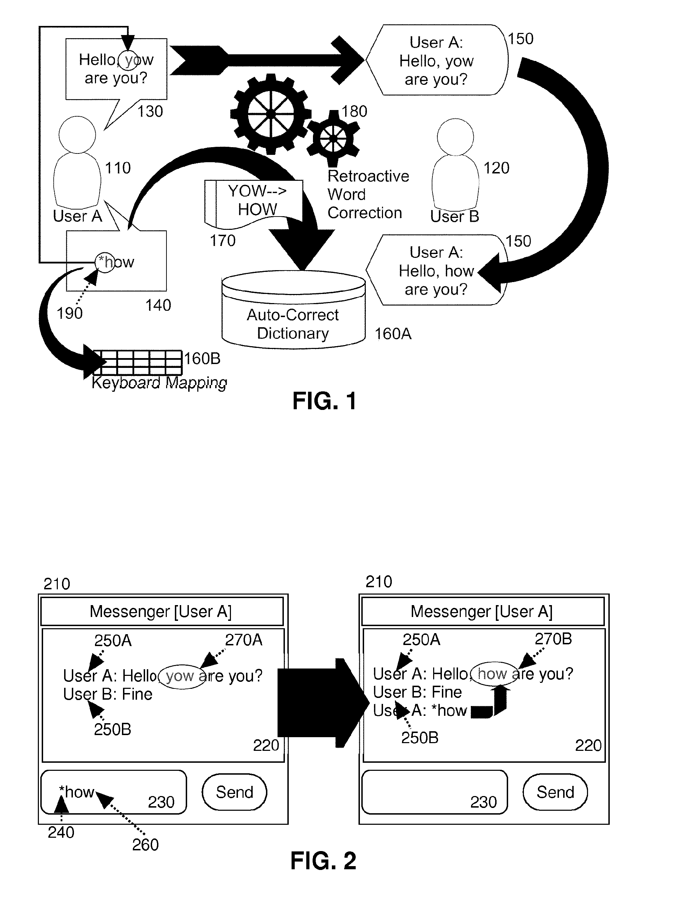

Referring now to Figure 1, a process for retroactive word correction in a messaging application such as an instant messaging application or an email application being executed on a processor of an electronic device is shown. The electronic device can include a mobile computing device, a smartphone, gaming console, personal computer, laptop computer, tablet computer and other such devices. As shown in in Figure 1, an end user 110 can compose a message 130 for transmission to a recipient user 120. The message 130, for example, can be an e-mail message, an entry in a blog, an instant message or a text message. Of note, the message 130 can include a misspelled word. Once transmitted to the recipient user 120, the message 130 can be viewed by the recipient user 120 as a received message 150 with the misspelled word. The end user 110, however, can recognize the misspelling in the message 130 and can provide a correction to the misspelled word in a subsequent message 140. For example, the end user 110 can annotate a corrected form of the misspelled word with a particular indicia 190 such as a word or symbol. Or, the end user 110 can select the misspelled word and manually direct the correction of the misspelled word with a corrected form of the misspelled word. Even further, the misspelling in the message 130 can be automatically detected by a process analyzing the message 130 even though the message 130 already had been transmitted.

In the first instance, retroactive word correction logic 180, present in a messaging client of the end user 110, the recipient user 120, or both, can respond to the recognition of the indicia 190 by locating within the already transmitted message 130 the misspelled word that corresponds to a corrected form of the misspelled word provided in connection with the indicia 190. Thereafter, a display of the misspelled word in the message 130 can be corrected retroactively for either or both of the end user 110 and the recipient user 120. Optionally, the corrected form of the misspelled word can be visually indicated in the display. Further, the retroactive word correction logic 180 can update an auto-correction dictionary 160A with an entry 170 for the misspelled word in the already transmitted message 130 and the correctly spelled word of the subsequent message 140. In this way, an auto-correction function of a spell checker of the messenger can benefit from the correction of the misspelled word of the already transmitted message 130.

Further, to the extent that the misspelled word resulted from the inaccurate use of an adaptable keyboard of the computing device, retroactive word correction logic 180 can update a keyboard mapping 160B of the adaptable keyboard to adapt to the inaccurate use of the keyboard of the computing device. The adaptation of the adaptable keyboard can include expanding in dimension one or more keys of a corresponding adaptable keyboard of the computing device. The adaptation of the adaptable keyboard also can include repositioning one or more keys of the corresponding adaptable keyboard of the computing device to more accurately map a selected key with the placement of a finger upon an image of a corresponding key of the adaptable keyboard.

The process described in connection with Figure 1 can be implemented in one embodiment of the invention for an instant messaging or text messaging client in which a thread of synchronously provided messages are displayed in a dynamic transcript for a duration of a conversation between two or more end users. In further illustration, Figure 2 is a screen shot of an example messenger user interface configured for retroactive word correction. As shown in Figure 2, a messenger user interface 210 can include a transcript view 220 in which different messages 250A, 250B can be posted as representative of a synchronous conversation between different end users. New messages can be composed in a text input field 230 also provided as part of the messenger user interface 210.

In operation, as a misspelled word 270A is identified by an end user in an already transmitted message 250A as displayed in the transcript view 220, a correctly spelled form 260 of the misspelled word 270A can be provided in the text input field 230 and the correctly spelled form 260 of the misspelled word 270A can be annotated with an indicia 240 so as to indicate a retroactive word correction. Thereafter, the already transmitted message 250A can be parsed to locate the misspelled word 270A that corresponds to the correctly spelled form 260 of the misspelled word 270A. Once located, the misspelled word 270A can be replaced in the transcript view 220 with a replacement word 270B indicative of the correctly spelled form 260 of the misspelled word 270A.

Of note, the correction of the located misspelled word 270A of the already transmitted message 250A can occur in a messenger user interface 210 of a composer of the already transmitted message 250A, a messenger user interface 210 of a recipient of the already transmitted message 250A, or both. In the latter instance, the misspelled word 270A can be identified according to the annotated indicia 240 to trigger the retroactive word correction process. Alternatively, the recipient of the already transmitted message 250A can manually select the misspelled word 270A and manually invoke the retroactive word correction process. As even a further alternative, an automated process can process the already transmitted message 250A to identify the misspelled word 270A.

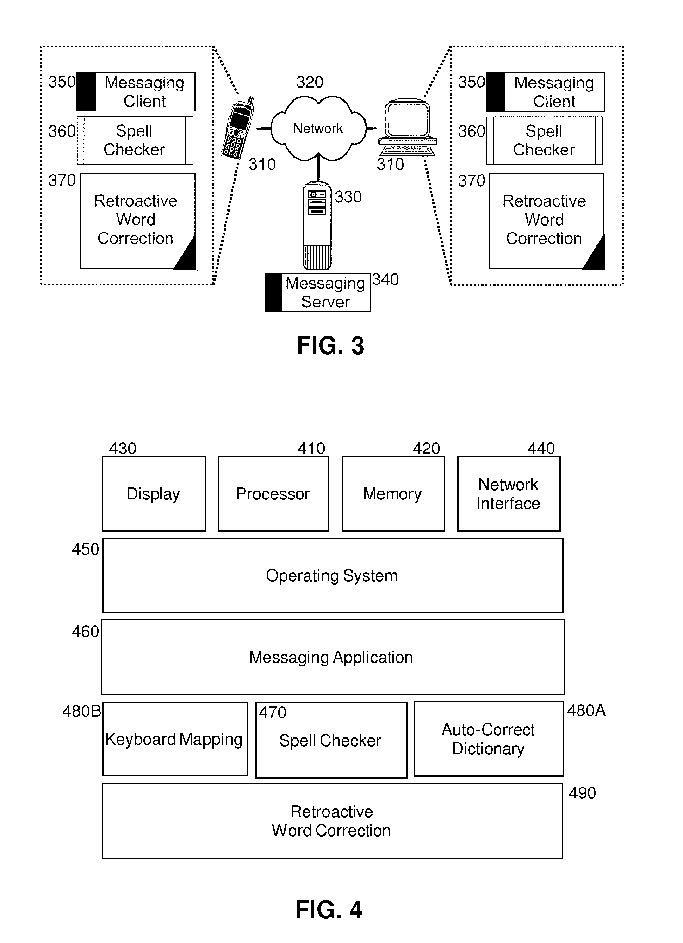

The process described in connection with Figure 2 can be implemented in one example embodiment of the invention in a messaging data processing system. In yet further illustration, Figure 3 schematically depicts a messaging data processing system configured for retroactive word correction. The system can include different electronic devices 310 coupled to one another over a communications network 320. Each of the electronic devices 310 can include at least one processor and memory. Further, each of the electronic devices 310 can include a messaging client 350 configured to manage the exchange of messages with other messaging clients 350 by way of a messaging server 340 executing in a host computing platform 330 communicatively coupled to each of the computing devices 310 over the communications network 320.

Of note, each of the electronic devices 310 additionally can include a spell checker 360 operative upon text input in the messaging client 350, and a retroactive word correction module 370. The retroactive word correction module 370 can include program code that when executed in memory of a host one of the electronic devices 310, is enabled to identify a correction to an incorrect word in a text input field, to locate within a previously transmitted message the incorrect word, and to replace the located incorrect word with the correction. The program code of the retroactive word correction module 370 also can include program code enabled to update an auto-correction dictionary of the spell checker 360 to reflect the correctly spelled form of the incorrectly spelled word, as well as a keyboard mapping for an adaptable keyboard of a corresponding one of the electronic devices 310.

As will be apparent from the illustration of Figure 3, the electronic devices 310 can vary in type and can be, by way of example, a smart phone or personal digital assistant, or as another example, a personal computer. Regardless of type, however, each of the electronic devices 310 can include a base architecture configured for retroactive spell correction in a messenger. In this regard, in even yet further illustration Figure 4 is a block diagram of a computing architecture configured for retroactive spell correction in a messenger. As shown in Figure 4, the architecture can include at its base at least one processor 410 coupled to memory 420 and a network interface 440, and providing a display 430. An operating system 450 can moderate access to the processor 410, memory 420, display 430 and network interface 440 and can support the operation of one or more applications including a messaging application 460.

The messaging application 460 can be configured to support the transmission of messages over a communications network, such as text messages, instant messages, blog messages, or e-mail messages, and can include a spell checker 470. The spell checker 470 can perform spell checking on composed messages and the spell checker 470 can access an auto-correct dictionary 480 in order to perform auto-correction upon identified misspellings in a composed message. Of import, a retroactive word correction module 490 can be coupled to the spell checker 470.

The retroactive word correction module 490 can include program code that when executed in the memory 420 by the processor 410 is enabled to identify a correction for an incorrect word of an already transmitted message. The correction can include a correction to an incorrectly spelled word, or a correction to a correctly spelled but unintentionally used word. The program code also can be enabled to locate the incorrect word in the already transmitted message and to replace the incorrect word with the correction in a display of the already transmitted message. Finally, to the extent that the incorrect word is a misspelled word, the program code can be enabled to update the auto-correct dictionary 480 with a record reflecting the misspelled word and its spell correction. Alternatively, to the extent that the incorrect word is determined to have resulted from an imprecise keyboard mapping of an adaptable keyboard, the keyboard mapping can be adjusted to improve a mapping of finger placement upon the adaptable keyboard to different keys corresponding to the different characters of the correction.

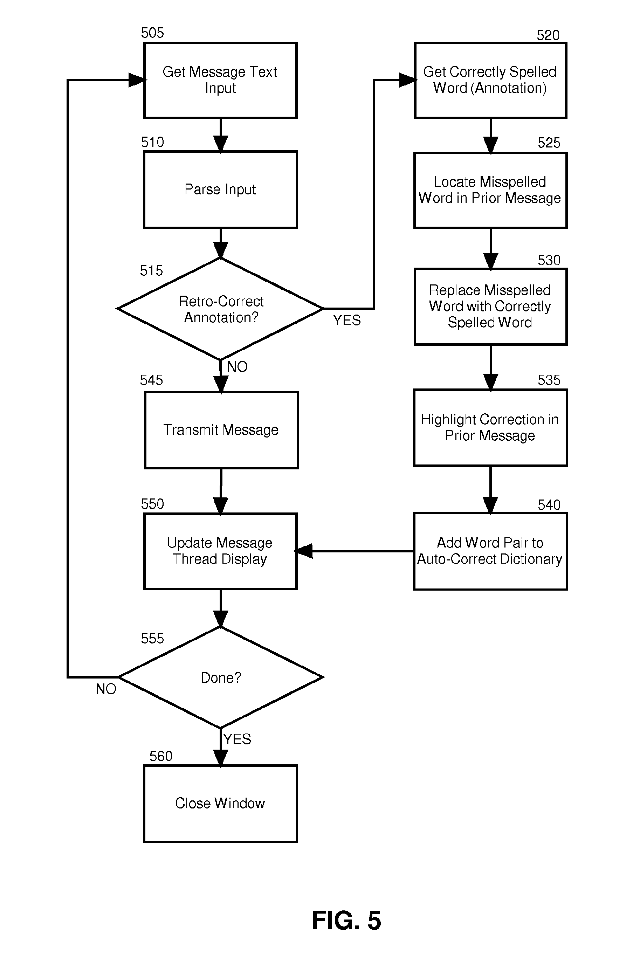

In even yet further illustration of the operation of the retroactive word correction module 490, Figure 5 is a flow chart illustrating an exemplary process for retroactive word correction in a messenger. Beginning in block 505, message text input can be received in a user interface for a messenger and in block 510, the message text input can be parsed to identify an annotation of a word indicating a spell correction to a misspelled word of a previously transmitted message. In decision block 515 it can be determined if an annotation is present sufficient to indicate a spell correction to a misspelled word of a previously transmitted message. If not, the message can be transmitted in block 545. Otherwise, the process can continue through block 520.

In block 520, a correctly spelled word associated with the located annotation can be retrieved. Thereafter, in block 525 a misspelled word in a previously transmitted message that corresponds to the correctly spelled word can be identified. As one example, a word in the previously transmitted message that shares a threshold number of characters in common with the correctly spelled word can be determined to correspond to the correctly spelled word. As another example, one or more words in the previously transmitted message that include characters corresponding to keys in a keyboard proximate to those keys of the correctly spelled word can be considered potential candidates for the misspelled word. To the extent that multiple possible words in the previously transmitted message are identified as potential candidates for the misspelled word, a disambiguation user interface can be presented to the end user for selecting the misspelled word.

Subsequently, in block 530 the misspelled word corresponding to the correctly spelled word can be replaced in the previously transmitted message with the correctly spelled word. Optionally, in block 535 the correctly spelled word can be visually distinguished in the previously transmitted message. As an additional option, in block 540 both the incorrectly spelled word and its correctly spelled counterpart can be added to an auto-correct dictionary of a spell checker of the messenger.

In block 550, a display of a thread of messages including the previously transmitted message can be updated to reflect the correction to the misspelled word. In decision block 555, it can be determined if additional messages remain to be composed and transmitted. If so, the process can return to block 505 with the acceptance of additional message text input. Otherwise, the process can end in block 560.

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, radiofrequency, and the like, or any suitable combination of the foregoing. Computer program code for carrying out operations for aspects of the present invention may be written in any combination of one or more programming languages, including an object oriented programming language and conventional procedural programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention have been described above with reference to flowchart illustrations and/or block diagrams of methods, apparatus (systems) and computer program products according to embodiments of the invention. In this regard, the flowchart and block diagrams in the Figures illustrate the architecture, functionality, and operation of possible implementations of systems, methods and computer program products according to various embodiments of the present invention. For instance, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

It also will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks. The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

Finally, the terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

Having thus described the invention of the present application in detail and by reference to embodiments thereof, it will be apparent that modifications and variations are possible without departing from the scope of the invention defined in the appended claims as follows:

## Claims

1. A retroactive spell correction method comprising:
identifying both an incorrectly spelled word in a previously transmitted message (140) in a message transmitting application (350) executing in memory (420) of an electronic device (310) and also a correctly spelled form of the incorrectly spelled word; and,
responsive to the identifying of the correctly spelled form of the incorrectly spelled word, (A) locating the incorrectly spelled word in the previously transmitted message (130) and (B) replacing the located incorrectly spelled word with the correctly spelled form of the incorrectly spelled word.

2. The method of claim 1, wherein the correctly spelled form of the incorrectly spelled word is identified according to an annotation (190) positioned proximately to the correctly spelled form of the incorrectly spelled word in the message.

3. The method of claim 1 or 2, further comprising updating a display (250A) of the previously transmitted message (130) with the correctly spelled form of the incorrectly spelled word in place of the incorrectly spelled word.

4. The method of any preceding claim, further comprising updating an auto-correction database (480A) with the incorrectly spelled word and the correctly spelled form of the incorrectly spelled word.

5. The method of any preceding claim, further comprising updating a keyboard mapping (480B) of an adaptable keyboard of the computing device to improve a mapping of finger placement upon the adaptable keyboard to different keys corresponding to different characters of the correctly spelled form of the incorrectly spelled word.

6. An electronic device (310) configured for retroactive spell correction comprising:
memory (420), at least one processor (410), a network interface (440) and a display (430);
an operating system (450) managing access to the memory (420), processor (410), network interface (440) and display (430);
a message transmitting application (460) executing in the memory (420) and displaying messages in the display (430);
a spell checker (470) coupled to the messenger (460) operable to perform spell checking on text in messages composed within the message transmitting application (460); and,
a retroactive spell correction module (490) coupled to the spell checker (470), the module (490) comprising program code enabled to identify both an incorrectly spelled word in a previously transmitted message (140) in the message transmitting application (460) and also a correctly spelled form of the incorrectly spelled word, and to respond to identifying the correctly spelled form of the incorrectly spelled word, (A) by locating the incorrectly spelled word in the previously transmitted message (130) and (B) by replacing the located incorrectly spelled word with the correctly spelled form of the incorrectly spelled word.

7. The system of claim 6, wherein the correctly spelled form of the incorrectly spelled word is identified according to an annotation (190) positioned proximately to the correctly spelled form of the incorrectly spelled word in the message.

8. The system of claim 6 or 7, wherein the program code is further enabled to update a display (250A) of the previously transmitted message with the correctly spelled form of the incorrectly spelled word in place of the incorrectly spelled word.

9. The system of any one of claims 6 to 8, further comprising an auto-correction database (480A) accessible by the spell checker (470) to perform auto-correction of misspelled words during message composition in the message transmitting application (460), wherein the program code is further enabled to update the auto-correction database (480) with the incorrectly spelled word and the correctly spelled form of the incorrectly spelled word.

10. The system of any one of claim 6 to 9, further comprising an adaptable keyboard, wherein the program code is further enabled to updating a keyboard mapping (480B) of the adaptable keyboard to improve a mapping of finger placement upon the adaptable keyboard to different keys corresponding to different characters of the correctly spelled form of the incorrectly spelled word.

11. A computer program product for retroactive spell correction, the computer program product comprising:
a computer readable storage medium having computer readable program code embodied therewith, the computer readable program code comprising:
computer readable program code for both identifying an incorrectly spelled word in a previously transmitted message (130) in a message transmitting application (460) executing in memory (420) of an electronic device (310) and also a correctly spelled form of the incorrectly spelled word; and,
computer readable program code for responding to the identifying of the correctly spelled form of the incorrectly spelled word (A) by locating the incorrectly spelled word in the previously transmitted message (130) and (B) by replacing the located incorrectly spelled word with the correctly spelled form of the incorrectly spelled word.

12. The computer program product of claim 11, wherein the correctly spelled form of the incorrectly spelled word is identified according to an annotation (190) positioned proximately to the correctly spelled form of the incorrectly spelled word in the message.

13. The computer program product of claim 11 or 12, further comprising computer readable program code for updating a display (250A) of the previously transmitted message (130) with the correctly spelled form of the incorrectly spelled word in place of the incorrectly spelled word.

14. The computer program product of any one of claims 11 to 13, further comprising computer readable program code for updating an auto-correction database (480A) with the incorrectly spelled word and the correctly spelled form of the incorrectly spelled word.

15. The computer program product of any one of claims 11 to 14, further comprising computer readable program code for updating a keyboard mapping (480B) of an adaptable keyboard of the computing device to improve a mapping of finger placement upon the adaptable keyboard to different keys corresponding to different characters of the correctly spelled form of the incorrectly spelled word.
